# EUROPÄISCHE PATENTSCHRIFT

(11) **EP 3 537 024 B1**
(45) Veröffentlichungstag und Bekanntmachung des Hinweises auf die Patenterteilung: **15.07.2020**
(21) Anmeldenummer: 19159313.6
(22) Anmeldetag: 26.02.2019
(51) Int. Cl.: F16P 3/14

(54) **SYSTEM ZUR KOLLISIONSVERMEIDUNG UND VERFAHREN ZUR KOLLISIONSVERMEIDUNG**
COLLISION AVOIDANCE SYSTEM AND METHOD FOR COLLISION AVOIDANCE
SYSTÈME PERMETTANT D'ÉVITER DES COLLISIONS ET PROCÉDÉ PERMETTANT D'ÉVITER DES COLLISIONS

(30) Priorität: 05.03.2018 DE 102018104987
(43) Veröffentlichungstag der Anmeldung: 11.09.2019
(73) Patentinhaber: Jungheinrich Aktiengesellschaft, 22047 Hamburg (DE)
(72) Erfinder: Grabbe, Florian, 22335 Hamburg (DE); Ahrens, Stefan, 25462 Rellingen (DE); Heise, Sven-Ole, 24783 Osterrönfeld (DE); Kopelke, Jan, 22337 Hamburg (DE); Altmann, Tony, 24616 Brokstedt (DE)
(74) Vertreter: Seemann & Partner Patentanwälte mbB

(56) Entgegenhaltungen:
- WO-A1-2016/033233
- WO-A1-2017/223425
- DE-A1-102005 037 650
- US-A1- 2011 279 261

## Beschreibung

Die Erfindung betrifft ein System zur Kollisionsvermeidung in einem Überwachungsbereich einer Warenlogistikeinrichtung und ein Verfahren zur Kollisionsvermeidung in einem Überwachungsbereich einer Warenlogistikeinrichtung.

Bei dem Betrieb von Flurförderzeugen, wie sie in Warenlogistikeinrichtungen eingesetzt werden, ist es sinnvoll, die Unfalls- und Kollisionsgefahr zu minimieren. Solche Warenlogistikeinrichtungen, wie zum Beispiel Lager- oder Industriehallen, weisen häufig beengte und unübersichtliche Räumlichkeiten auf.

Vor diesem Hintergrund ist der Einsatz von Systemen zur Kollisionsvermeidung sinnvoll, die andere Personen und Flurförderzeuge auf die Anwesenheit eines sich nähernden Flurförderzeugs hinweisen. Zu diesem Zweck sind Flurförderzeuge häufig mit Lichtsignalen oder akustischen Signalen ausgestattet. Akustische Signale werden jedoch auf Grund von Umgebungsgeräuschen überhört. Optische Signale sind hingegen nur bei Sichtkontakt zum Flurförderzeug gut zu erkennen und können auf Grund von anderen Lichtsignalen übersehen werden.

Zudem werden Geräusche einer Warnsirene oder die Lichtsignale einer Warnleuchte auch dann wahrgenommen, wenn überhaupt keine Kollisionsgefahr besteht. Dies ist beispielsweise der Fall, wenn sich das Flurförderzeug von einer Person wegbewegt. Dadurch entsteht die Gefahr, dass bei dem zu häufigen Auftreten von nicht-relevanten Warnungen die Warnsignale beim Bestehen einer tatsächlichen Kollisionsgefahr ignoriert werden. Zudem wird die Produktivität in der Warenlogistikeinrichtung dadurch unnötig eingeschränkt.

Aus WO 2017/223425 A1 ist ein System zur Kollisionsvermeidung gemäß dem Oberbegriff der Ansprüche 1 und 9 bekannt. Es wird ein Überholmanöver eines Flurförderzeugs in einem automatisierten Prozess autorisiert. Dieser Prozess umfasst den Empfang einer ersten, zweiten und dritten Nachricht durch einen Prozessor. Die erste Nachricht gibt die Position eines ersten Flurförderzeugs in einer Arbeitsumgebung an. Die zweite Nachricht gibt die Position eines elektronischen Ausweises oder einer Plakette an, der von dem ersten Flurförderzeug erfasst wird. Die dritte Nachricht gibt die Position eines zweiten Flurförderzeugs innerhalb der Arbeitsumgebung an. Der Prozessor bestimmt, dass das zweite Flurförderzeug beabsichtigt, das erste Flurförderzeug zu überholen und legt einen Befehl fest, der das Überholmanöver erlaubt oder nicht. Dieser Befehl wird basierend auf der Position des ersten Flurförderzeugs, der Position der Plakette und der Position des zweiten Flurförderzeugs generiert und dem zweiten Flurförderzeug mitgeteilt.

Aus US 2011/279261 A1 ist ein Ereigniswarnsystem bekannt. Es können in Echtzeit Warnmeldungen erzeugt werden, die an einen Fahrer oder einen Fußgänger, der sich in Gefahr befindet oder sich möglicherweise einer Gefahr nähert, ausgegeben werden. Anders als allgemeine Warnungen wie z.B. Blinklichter, minimiert dieses personalisierte Warnsystem die Wirksamkeit des Alarms.

Die Aufgabe der Erfindung besteht darin, ein System und ein Verfahren zur Kollisionsüberwachung in einem Überwachungsbereich einer Warenlogistikeinrichtung zur Verfügung zu stellen, die gleichzeitig eine hohe Sicherheit erreichen ohne den Betrieb der Warenlogistikeinrichtung unnötig zu behindern.

Diese Aufgabe wird gelöst durch ein System zur Kollisionsvermeidung in einem Überwachungsbereich einer Warenlogistikeinrichtung, umfassend eine erste Sende- und Empfangsvorrichtung, eine zweite Sende- und Empfangsvorrichtung und wenigstens zwei ortsfeste Ortungsvorrichtungen, wobei die Ortungsvorrichtungen zum Senden und Empfangen von elektromagnetischen Signalen eingerichtet sind und die Positionen der Ortungsvorrichtungen bezüglich des Überwachungsbereichs vorgebbar oder bestimmbar sind, wobei die erste Sende- und Empfangsvorrichtung an einem Flurförderzeug und die zweite Sende- und Empfangsvorrichtung an einem beweglichen Objekt angeordnet sind, wobei das System dazu eingerichtet ist, eine Objektposition des beweglichen Objekts in dem Überwachungsbereich mittels Laufzeitmessung eines Signals zwischen der zweiten Sende- und Empfangsvorrichtung und den Ortungsvorrichtungen zu ermitteln, wobei das System ferner dazu eingerichtet ist, zu ermitteln, ob eine Kollisionsgefahr zwischen Flurförderzeug und beweglichem Objekt besteht, und bei Bestehen einer Kollisionsgefahr Schutzmaßnahmen einzuleiten, wobei der Überwachungsbereich wenigstens eine Separationszone umfasst, und wobei das System dazu eingerichtet ist, festzulegen, dass keine Kollisionsgefahr zwischen Flurförderzeug und beweglichem Objekt besteht, wenn sich die Objektposition in der Separationszone befindet, wobei das System dadurch weitergebildet ist, dass das Bestehen und/oder die Form und/oder die Ausdehnung und/oder die Anordnung der Separationszone zeitabhängig oder zeitlich veränderlich ist.

Das erfindungsgemäße System zur Kollisionsvermeidung in einem Überwachungsbereich einer Warenlogistikeinrichtung ermöglicht es, über Laufzeitmessungen zwischen der am beweglichen Objekt fixierten zweiten Sende- und Empfangsvorrichtung und den ortsfesten Ortungsvorrichtungen die Objektposition des beweglichen Objekts in dem Überwachungsbereich zu bestimmen. Gleichzeitig ist das System dazu eingerichtet, eine Kollisionsgefahr zwischen Flurförderzeug und beweglichem Objekt zu erkennen. In einer ersten Ausführungsform kann dies beispielsweise über Laufzeitmessung zwischen der ersten Sende- und Empfangsvorrichtung am Flurförderzeug und der zweiten Sende- und Empfangsvorrichtung am beweglichen Objekt geschehen. Mittels dieser Laufzeitmessung wird der Abstand zwischen Flurförderzeug und beweglichem Objekt ermittelt und bei Unterschreiten eines vorgebbaren Mindestabstands Schutzmaßnahmen eingeleitet. Die Erfindung umfasst jedoch auch andere Möglichkeiten zum Ermitteln einer Kollisionsgefahr zwischen Flurförderzeug und beweglichem Objekt, die an späterer Stelle beschrieben werden.

Die ortsfesten Ortungsvorrichtungen werden vielfach auch als Ankerknoten bezeichnet.

Eine Positionsbestimmung des beweglichen Objekts in einem ebenen, festgelegten Überwachungsbereich einer Warenlogistikeinrichtung ist, sofern Zusatzinformationen vorliegen, bereits mit zwei Ortungsvorrichtungen möglich. Dies ergibt sich daraus, dass sich in dem ebenen Überwachungsbereich bei bekannten Abständen zwischen dem beweglichen Objekt und den Ortungsvorrichtungen Abstandskreise um die Ortungsvorrichtungen definieren lassen. Bei zwei Ortungsvorrichtungen entspricht die Position des beweglichen Objekts dann einem der beiden Schnittpunkte der Abstandskreise. Sind beispielsweise beide Ortungsvorrichtungen an einer äußeren Begrenzung des Überwachungsbereichs angeordnet, dann liegt einer der beiden Schnittpunkte stets außerhalb des Überwachungsbereichs. Diese Information steht dem System als Zusatzinformation zur Verfügung, so dass es nur den innerhalb des Überwachungsbereichs liegenden Schnittpunkt in Betracht zieht und die Position des beweglichen Objekts eindeutig bestimmen kann.

Vorteilhaft werden jedoch wenigstens drei Ortungsvorrichtungen eingesetzt, da diese bei einer beliebigen Anordnung eine genaue Ortung des beweglichen Objekts in einem ebenen Überwachungsbereich ermöglichen. Bei einem komplexeren Überwachungsbereich, der beispielsweise mehrere Etagen eines Gebäudes oder mehrere Lagerregalreihen umfasst, ist vorteilhaft die Zahl der Ortungsvorrichtungen entsprechend zu erhöhen.

Unter einem beweglichen Objekt wird im Rahmen dieser Anmeldung beispielsweise eine Person oder ein Flurförderzeug verstanden. Unter einer Warenlogistikeinrichtung wird beispielsweise eine Lagerhalle, eine Industriehalle, eine Werkstatthalle oder ein zusammenhängender Komplex solcher Hallen verstanden. Unter einem Überwachungsbereich wird ein Bereich innerhalb einer Warenlogistikeinrichtung verstanden, in dem mittels einer Laufzeitmessung zwischen den Ortungsvorrichtungen und einer Sende- und Empfangsvorrichtung die Position eines mit dieser Sende- und Empfangsvorrichtung versehenen Objekts bestimmbar ist. Der Überwachungsbereich kann auch auf einen kleineren Bereich, beispielsweise einen Teil einer Halle, eingeschränkt werden.

Vorteilhaft wird durch eine erfindungsgemäße Separationszone verhindert, dass Schutzmaßnahmen ausgelöst werden, ohne dass eine Kollisionsgefahr besteht. Dies ist beispielsweise dann der Fall, wenn sich eine Person nahe an dem Flurförderzeug befindet, aber von diesem durch ein unpassierbares Hindernis, beispielsweise einen Sicherheitszaun, getrennt ist. Auf diese Weise wird vermieden, dass die Produktivität in der Warenlogistikeinrichtung durch das Auslösen unnötiger Schutzmaßnahmen verringert wird.

Bevorzugt wird überprüft, ob sich die Objektposition in der Separationszone befindet, indem mittels der Ortungsvorrichtungen ein festlegbarer Teil des Überwachungsbereichs als Separationszone definiert und die Objektposition mit diesem festlegbaren Teil des Überwachungsbereichs verglichen wird, wobei insbesondere die Form und/oder Ausdehnung und/oder Anordnung der Separationszone vorgebbar ist.

Die Separationszone ist vorteilhaft als virtuelle Zone festlegbar. Diese virtuelle Zone umfasst einen festlegbaren Teil des Überwachungsbereichs, der im Bezug zu einem Koordinatensystem, das durch die Ortungsvorrichtungen vorgegeben ist, festgelegt ist. Durch die Bestimmung der Objektposition kann überprüft werden, ob sich das bewegliche Objekt in der Separationszone befindet. Vorteilhaft ist dadurch eine exakte Definition der Separationszone möglich, die weder Bereiche außerhalb eines sicheren Bereichs umfasst noch Teile innerhalb des sicheren Bereichs ausschließt. Eine solche Separationszone folgt beispielsweise exakt dem Verlauf eines Sicherheitszauns.

In einer bevorzugten Ausführungsform ist das System dazu eingerichtet, eine Flurförderzeugposition des Flurförderzeugs in dem Überwachungsbereich mittels Laufzeitmessung eines Signals zwischen der ersten Sende- und Empfangsvorrichtung und den Ortungsvorrichtungen zu ermitteln und bei der Ermittlung der Kollisionsgefahr zwischen Flurförderzeug und beweglichem Objekt die Flurförderzeugposition und die Objektposition zu berücksichtigen.

Gemäß dieser Ausführungsform wird somit nicht nur die Objektposition, sondern auch die Flurförderzeugposition mittels Laufzeitmessung bestimmt. Dadurch ist es möglich, zur Ermittlung der Kollisionsgefahr die Objektposition und die Flurförderzeugposition zu berücksichtigen. Eine Laufzeitmessung zwischen der ersten Sende- und Empfangsvorrichtung und der zweiten Sende- und Empfangsvorrichtung ist in diesem Fall zur Ermittlung einer Kollisionsgefahr nicht erforderlich. In dieser Ausführungsform kann beispielsweise vorteilhaft bei der Ermittlung der Kollisionsgefahr berücksichtigt werden, dass das Flurförderzeug und das bewegliche Objekt durch ein Hindernis, dessen Position bekannt ist, getrennt sind.

Gemäß einer alternativen Ausführungsform wird zwar mittels Laufzeitmessung die Flurförderzeugposition bestimmt, die Kollisionsgefahr wird aber weiterhin oder zusätzlich durch eine Laufzeitmessung zwischen erster Sende- und Empfangsvorrichtung und zweiter Sende- und Empfangsvorrichtung bestimmt.

Das Bestehen und/oder die Form und/oder die Ausdehnung und/oder die Anordnung der Separationszone sind zeitabhängig oder zeitlich veränderlich, wobei insbesondere eine Abhängigkeit der Separationszone von der Flurförderzeugposition und/oder der Objektposition und/oder der Position eines ortsfesten Objekts besteht.

Insbesondere ist es vorgesehen, bestimmte Separationszonen als veränderliche Separationszonen und andere Separationszonen als unveränderliche Separationszonen festzulegen. Als unveränderliche Separationszonen kommen beispielsweise Schutzzonen in Betracht, die für Flurförderzeuge unpassierbar sind. Als veränderliche Separationszonen kommen Bereiche in Betracht, die zwar durch Hindernisse wie Wände oder Regale von anderen Bereichen getrennt sind, aber trotzdem von Flurförderzeugen befahrbar sind. So können diese Bereiche als Separationszonen festgelegt werden, solange sich kein Flurförderzeug in dieser Separationszone befindet, um auf diese Weise zu verhindern, dass eine Kollisionsgefahr zwischen einer Person in dieser Separationszone und einem Flurförderzeug jenseits des Hindernisses ausgelöst wird. Fährt hingegen ein Flurförderzeug in die Separationszone ein, so wird diese Separationszone aufgehoben oder verkleinert.

Gemäß einer Ausführungsform ist das System dazu eingerichtet, für das Flurförderzeug eine Fahrzeugkonturerweiterungszone und das bewegliche Objekt eine Objektkonturerweiterungszone festzulegen, wobei die Flurförderzeugposition in der Fahrzeugkonturerweiterungszone und die Objektposition in der Objektkonturerweiterungszone liegt, wobei eine Kollisionsgefahr zwischen Flurförderzeug und beweglichem Objekt als bestehend ermittelt wird, wenn sich die Fahrzeugkonturerweiterungszone und die Objektkonturerweiterungszone überlappen und sich die Objektposition außerhalb der Separationszone befindet.

Eine solche Konturerweiterungszone kann beispielsweise aus einem Kreis bestehen, dessen Mittelpunkt auf der Flurförderzeugposition oder der Objektposition liegt. Die Erfindung umfasst aber auch andere Formen der Konturerweiterungszonen. Vorteilhaft ist durch eine Berücksichtigung von Konturerweiterungszonen die Kollisionsgefahr genauer ermittelbar.

Bevorzugt ist das System dazu eingerichtet, die Geschwindigkeit und Bewegungsrichtung des Flurförderzeugs und des beweglichen Objekts zu ermitteln, insbesondere mittels einem Hodometer und/oder einer inertialen Messeinheit und/oder einer Positionsbestimmung mittels Laufzeitmessung eines Signals zwischen der ersten Sende- und Empfangsvorrichtung und den Ortungsvorrichtungen und zwischen der zweiten Sende- und Empfangsvorrichtung und den Ortungsvorrichtungen.

Bei der Positionsbestimmung mittels Laufzeitmessung wird die Geschwindigkeit und Bewegungsrichtung durch wiederholte Positionsbestimmungen ermittelt, so dass insbesondere ein von dem Flurförderzeug oder dem beweglichen Objekt in dem Überwachungsbereich zurückgelegter Weg in Abhängigkeit der Zeit bestimmbar ist.

Weiterhin bevorzugt sind die Größen der Fahrzeugkonturerweiterungszone und der Objektkonturerweiterungszone von der Geschwindigkeit des Flurförderzeugs beziehungsweise des beweglichen Objekts abhängig, wobei sich bei einer höheren Geschwindigkeit die Konturerweiterungszonen verändern, insbesondere sich vergrößern, wobei die Konturerweiterungszonen in Richtung der Bewegungsrichtung gegenüber anderen Richtungen weiter ausgedehnt sind.

Indem die Form der Konturerweiterungszonen von der Geschwindigkeit und Bewegungsrichtung des Flurförderzeugs und des beweglichen Objekts abhängig ist, ist das Bestehen einer Kollisionsgefahr genauer bestimmbar. Durch Vergrößern der Konturerweiterungszone in Richtung der Bewegungsrichtung kommt es auch bei einem größeren Abstand zwischen Flurförderzeug und beweglichem Objekt zu einem Überlappen der Konturerweiterungszonen, wenn sich das Flurförderzeug auf das bewegliche Objekt, das bewegliche Objekt auf das Flurförderzeug oder beide aufeinander zu bewegen, so dass in diesem Fall bereits bei einem größeren Abstand eine Kollisionsgefahr festgestellt wird. In Richtung entgegen der Bewegungsrichtung werden die Konturerweiterungszonen bevorzugt verkleinert. Auf diese Weise wird das Auslösen von Schutzmaßnahmen vermieden, wenn sich beispielsweise das Flurförderzeug vom beweglichen Objekt wegbewegt. Die Konturerweiterungszonen können beispielsweise ellipsenförmig. Es sind aber auch andere veränderbare Formen der Konturerweiterungszonen von der Erfindung umfasst.

Die Signalübertragung zwischen der ersten Sende- und Empfangsvorrichtung und den Ortungsvorrichtungen und/oder der zweiten Sende- und Empfangsvorrichtung und den Ortungsvorrichtungen findet bevorzugt mittels Ultra-Breitband-Technologie statt.

Bevorzugt umfassen die Schutzmaßnahmen einen Eingriff in Steuerfunktionen des Flurförderzeugs und/oder die Ausgabe einer Warnung. Insbesondere wird eine solche Warnung als optisches Signal auf einem Display des Flurförderzeugs angezeigt und/oder als akustisches Signal beim Flurförderzeug ausgegeben. Zudem oder alternativ wird ein optisches und/oder akustisches Signal an einer mit der zweiten Sende- und Empfangsvorrichtung verbundenen Warnvorrichtung ausgegeben. Der Eingriff in die Steuerfunktion des Flurförderzeugs umfasst insbesondere das Abbremsen des Flurförderzeugs. Handelt es sich bei dem beweglichen Objekt um ein anderes Flurförderzeug, so ist bevorzugt ebenfalls ein Eingriff in die Steuerfunktion dieses Flurförderzeugs vorgesehen.

Die Aufgabe wird außerdem gelöst durch ein Verfahren zur Kollisionsvermeidung in einem Überwachungsbereich einer Warenlogistikeinrichtung, wobei wenigstens zwei Ortungsvorrichtungen, die zum Senden oder Empfangen von elektromagnetischen Signalen eingerichtet sind, ortsfest an vorgebbaren oder bestimmbaren Positionen angeordnet werden, wobei eine erste Sende- und Empfangsvorrichtung an einem Flurförderzeug und eine zweite Sende- und Empfangsvorrichtung an einem beweglichen Objekt fixiert wird, wobei eine Objektposition des beweglichen Objekts in dem Überwachungsbereich mittels Laufzeitmessung eines Signals zwischen der zweiten Sende- und Empfangsvorrichtung und den Ortungsvorrichtungen ermittelt wird, wobei ermittelt wird, ob eine Kollisionsgefahr zwischen Flurförderzeug und beweglichem Objekt besteht, und bei Bestehen einer Kollisionsgefahr Schutzmaßnahmen eingeleitet werden, wobei der Überwachungsbereich wenigstens eine Separationszone umfasst, und wobei festgelegt wird, dass keine Kollisionsgefahr zwischen Flurförderzeug und beweglichem Objekt besteht, wenn sich die Objektposition in der Separationszone befindet, wobei das Verfahren dadurch weitergebildet ist, dass das Bestehen und/oder die Form und/oder die Ausdehnung und/oder die Anordnung der Separationszone zeitabhängig oder zeitlich veränderlich ist.

Weiterhin ist bevorzugt wenigstens eine Steuervorrichtung, insbesondere ein Computer, vorgesehen, die an dem Flurförderzeug und/oder dem beweglichen Objekt und/oder wenigstens an einer der Ortungsvorrichtungen angeordnet ist. Alternativ oder zusätzlich ist wenigstens eine Steuervorrichtung separat zu dem Flurförderzeug, dem beweglichen Objekt und den Ortungsvorrichtungen angeordnet. Die Steuervorrichtung ist ausgestattet, die Kollisionsgefahr zwischen Flurförderzeug und beweglichem Objekt zu ermitteln, Separationszonen festzulegen sowie die Objektposition und insbesondere auch die Flurförderzeugposition zu bestimmen.

Bevorzug wird überprüft, ob sich die Objektposition in der Separationszone befindet, indem mittels der Ortungsvorrichtungen ein festlegbarer Teil des Überwachungsbereichs als Separationszone definiert und die Objektposition mit diesem festlegbaren Teil des Überwachungsbereichs verglichen wird, wobei insbesondere die Form und/oder Ausdehnung und/oder Anordnung der Separationszone vorgebbar ist.

Weiterhin bevorzugt wird eine Flurförderzeugposition des Flurförderzeugs in dem Überwachungsbereich mittels Laufzeitmessung eines Signals zwischen der ersten Sende- und Empfangsvorrichtung und den Ortungsvorrichtungen ermittelt und bei dem Ermitteln einer Kollisionsgefahr zwischen Flurförderzeug und beweglichem Objekt die Flurförderzeugposition und die Objektposition berücksichtigt.

Das Bestehen und/oder die Form und/oder die Ausdehnung und/oder die Anordnung der Separationszone sind zeitabhängig oder zeitlich veränderlich, wobei insbesondere eine Abhängigkeit der Separationszone von der Flurförderzeugposition und/oder der Objektposition und/oder der Position eines ortsfesten Objekts besteht.

In einer bevorzugten Ausführungsform wird für das Flurförderzeug eine Fahrzeugkonturerweiterungszone und das bewegliche Objekt eine Objektkonturerweiterungszone festgelegt, wobei die Flurförderzeugposition in der Fahrzeugkonturerweiterungszone und die Objektposition in der Objektkonturerweiterungszone liegt, wobei eine Kollisionsgefahr zwischen Flurförderzeug und beweglichem Objekt als bestehend ermittelt wird, wenn sich die Fahrzeugkonturerweiterungszone und die Objektkonturerweiterungszone überlappen und sich die Objektposition außerhalb der Separationszone befindet.

Bevorzugt werden die Geschwindigkeit und Bewegungsrichtung des Flurförderzeugs und des beweglichen Objekts ermittelt, insbesondere mittels eines Hodometers und/oder einer inertialen Messeinheit und/oder einer Positionsbestimmung mittels Laufzeitmessung eines Signals zwischen der ersten Sende- und Empfangsvorrichtung und den Ortungsvorrichtungen und zwischen der zweiten Sende- und Empfangsvorrichtung und den Ortungsvorrichtungen.

Weiterhin bevorzugt sind die Größen der Fahrzeugkonturerweiterungszone und der Objektkonturerweiterungszone von der Geschwindigkeit des Flurförderzeugs beziehungsweise des beweglichen Objekts abhängig, wobei sich bei einer höheren Geschwindigkeit die Konturerweiterungszonen verändern, insbesondere sich vergrößern, wobei die Konturerweiterungszonen in Richtung der Bewegungsrichtung gegenüber anderen Richtungen weiter ausgedehnt sind.

Die Signalübertragung zwischen der ersten Sende- und Empfangsvorrichtung und den Ortungsvorrichtungen und/oder der zweiten Sende- und Empfangsvorrichtung und den Ortungsvorrichtungen findet bevorzugt mittels Ultra-Breitband-Technologie statt.

Weiterhin bevorzugt umfassen die Schutzmaßnahmen ein Eingreifen in die Steuerfunktion des Flurförderzeugs und/oder das Ausgeben einer Warnung.

Das Verfahren zur Kollisionsvermeidung verkörpert die gleichen Vorteile, Merkmale und Eigenschaften wie das zuvor beschriebene System zur Kollisionsvermeidung.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Positionsbestimmung in einem Überwachungsbereich mittels Laufzeitmessung,
- Fig. 2: eine schematische Darstellung einer Positionsbestimmung in einem Überwachungsbereich mittels Laufzeitmessung mit zwei Ortungsvorrichtungen,
- Fig. 3: eine schematische Darstellung eines Verfahrens zur Ermittlung einer Kollisionsgefahr mittels Konturerweiterungszonen,
- Fig. 4: eine schematische Darstellung eines Überwachungsbereichs mit einer Separationszone, einem Flurförderzeug und einer Person,
- Fig. 5: eine schematische Darstellung eines Überwachungsbereichs mit einer Separationszone und zwei Flurförderzeugen und
- Fig. 6: eine schematische Darstellung eines Überwachungsbereichs mit einer zeitlich veränderlichen Separationszone.

In den Zeichnungen sind jeweils gleiche oder gleichartige Elemente und/oder Teile mit denselben Bezugsziffern versehen, so dass von einer erneuten Vorstellung jeweils abgesehen wird.

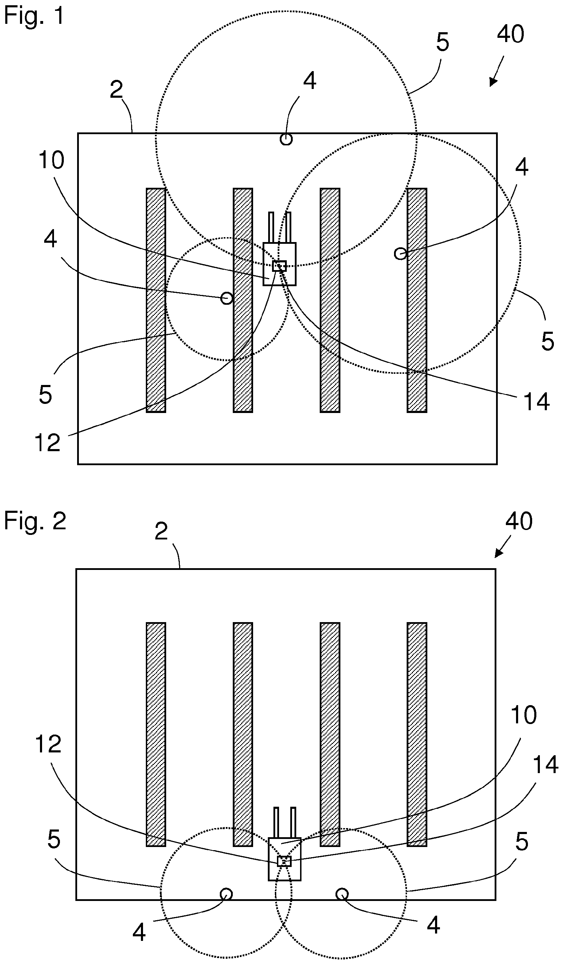

In Fig. 1 ist schematisch eine Lagerhalle 40 als Beispiel für eine Warenlogistikeinrichtung gezeigt, in der sich ein Flurförderzeug 10 befindet. Eine solche Lagerhalle 40 ist, wie in Fig. 1 gezeigt, auf Grund von Hindernissen wie Regalen oder Wänden häufig beengt und unübersichtlich. In der Lagerhalle 40 sind drei ortsfeste Ortungsvorrichtungen 4 angeordnet. Die Ortungsvorrichtungen 4 sind jeweils mit Mitteln zum Senden und Empfangen von elektromagnetischen Signalen ausgestattet, insbesondere von Signalen, wie sie in der Ultra-Breitband-Technologie eingesetzt werden. Die Erfindung umfasst aber auch Ausführungsformen mit weniger und insbesondere mehr als drei Ortungsvorrichtungen 4. Die Ortungsvorrichtungen 4 müssen auch nicht in der Lagerhalle 40 bzw. dem Überwachungsbereich 2 angeordnet sein, sondern können sich auch außerhalb von diesen befinden. Der Überwachungsbereich 2 entspricht in dem in Fig. 1 gezeigten Beispiel der Lagerhalle 40, könnte aber auch nur auf einen Teil dieser Lagerhalle 40 beschränkt werden.

Das Flurförderzeug 10 ist mit einer ersten Sende- und Empfangsvorrichtung 12 ausgestattet, die ebenfalls zum Senden und Empfangen derartiger Signale eingerichtet ist. Zur Bestimmung des Abstands der ersten Sende- und Empfangsvorrichtung 12 und einer Ortungsvorrichtung 4 wird eine aus der Technik bekannte Laufzeitmessung durchgeführt. Dadurch lässt sich für jede Ortungsvorrichtung 4 ein Abstandskreis 5 bestimmen, in dem sich die erste Sende- und Empfangsvorrichtung 12 und damit das Flurförderzeug 10 aufhält. Bei einem dreidimensionalen Überwachungsbereich 2 handelt es sich stattdessen um Abstandskugeln. Um die Flurförderzeugposition 14 zu bestimmen, müssen zum einen die Positionen bekannt sein, an denen sich die Ortungsvorrichtungen 4 befinden, und zum anderen der Schnittpunkt bestimmt werden, an dem sich alle Abstandskreise 5 schneiden. Die Flurförderzeugposition 14 liegt dann genau auf diesem Schnittpunkt. Die Position eines in Fig. 1 nicht gezeigten beweglichen Objekts 20 wird auf äquivalente Weise bestimmt.

In Fig. 2 ist schematisch dargestellt, wie die Position des Flurförderzeugs 10 oder eines beweglichen Objekts mit nur zwei Ortungsvorrichtungen 4 bestimmt werden kann. Dazu wird der Überwachungsbereich 2 so definiert, dass er mit der Fläche der Lagerhalle 40 identisch ist oder vollständig innerhalb der Lagerhalle 40 liegt. Die zwei Ortungsvorrichtungen 4 werden dann beispielsweise an die gleiche Wand der Lagerhalle 40 angebracht. Bei der Bestimmung der Flurförderzeugposition 14 ergeben sich als zwei mögliche Positionen die zwei Schnittpunkte der Abstandskreise 5. Durch die Anordnung der Ortungsvorrichtung 4 an einem Rand des Überwachungsbereichs 2 liegt aber ein Schnittpunkt stets außerhalb des Überwachungsbereichs 2 bzw. der Lagerhalle 40.

Um die Flurförderzeugposition 14 zu bestimmen, wird der Schnittpunkt außerhalb der Lagerhalle 40 wird bei der Positionsbestimmung ignoriert, so dass die Position des Flurförderzeugs 10 eindeutig bestimmbar ist. Optimalerweise sollte dazu der Bereich hinter dieser Wand der Lagerhalle 40 für Flurförderzeuge unzugänglich sein, so dass eine fehlerhafte Positionsbestimmung vermieden wird.

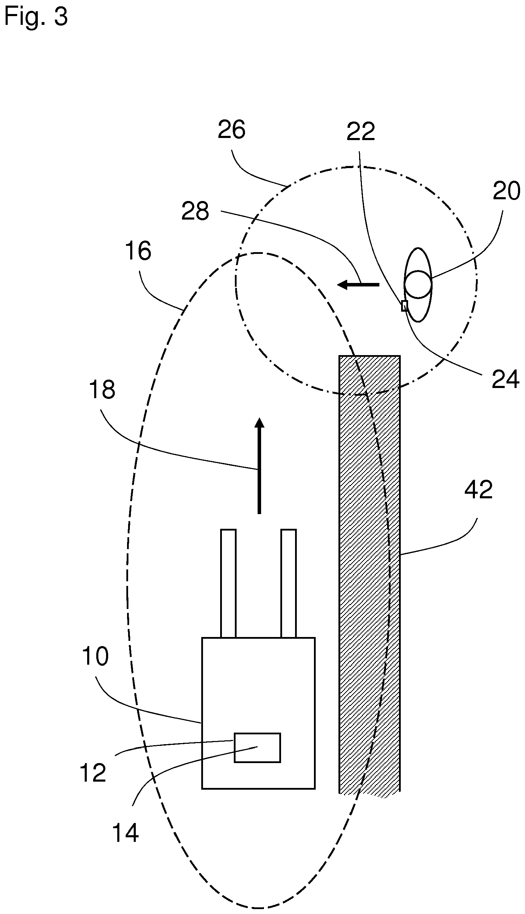

Fig. 3 zeigt schematisch ein Verfahren zur Kollisionsvermeidung mittels Konturerweiterungszonen 16, 26. Dazu wird zunächst die Flurförderzeugposition 14 des Flurförderzeugs 10 und die Objektposition 24 des beweglichen Objekts 20, in diesem Fall einer Person, bestimmt. Weiterhin wird die Bewegungsrichtung und die Geschwindigkeit des Flurförderzeugs 10 und des beweglichen Objekts 20 bestimmt. Dies geschieht beispielsweise mittels eines Hodometers und/oder einer inertialen Messeinheit (IMU) und/oder mehreren, zeitlich hintereinanderliegenden Positionsbestimmungen. Es ergeben sich ein erster Bewegungsvektor 18 für das Flurförderzeug 10 und ein zweiter Bewegungsvektor 28 für das bewegliche Objekt 20.

Weiterhin wird eine Fahrzeugkonturerweiterungszone 16 um das Flurförderzeug 10 und eine Objektkonturerweiterungszone 26 um das bewegliche Objekt 20 gelegt. Bewegen sich Flurförderzeug 10 und bewegliches Objekt 20 nicht, so sind diese Konturerweiterungszonen 16, 26 beispielsweise Kreise, die um die Flurförderzeugposition 14 bzw. die Objektposition 24 als Mittelpunkte gelegt sind. Bei einer Bewegung des Flurförderzeugs 10 beziehungsweise des beweglichen Objekts 20 verändern sich die entsprechenden Konturerweiterungszonen 16, 26, wobei sich die Konturerweiterungszonen 16, 26 insbesondere in Richtung der Bewegungsvektoren 18, 28 vergrößern, wie in Fig. 3 gezeigt.

Kommt es zu einem Überlappen der Konturerweiterungszonen 16, 26, so wird eine Kollisionsgefahr zwischen Flurförderzeug 10 und beweglichem Objekt 20 festgestellt. In der in Fig. 3 gezeigten Konstellation wird auf diese Weise eine Kollisionsgefahr zwischen Flurförderzeug 10 und der Person erkannt, obwohl ein direkter Sichtkontakt durch ein Regal 42 versperrt ist. In diesem Fall wird beispielsweise automatisch die Geschwindigkeit des Flurförderzeugs 10 reduziert und/oder eine optische und/oder akustische Warnung am Flurförderzeug 10 und/oder dem beweglichen Objekt ausgegeben.

Die erste Sende- und Empfangsvorrichtung 12 wird bevorzugt so an dem Flurförderzeug 10 angebracht, dass eine störungsfreie Kommunikation mit den Ortungsvorrichtungen 4 möglich ist. Die zweite Sende- und Empfangsvorrichtung 22 kann beispielsweise, wie in Fig. 3 gezeigt, an der Kleidung einer Person angebracht werden oder auf einem Helm oder in den Schuhen fixiert sein, oder, falls es sich bei dem beweglichen Objekt 20 um ein Flurförderzeug handelt, entsprechend der ersten Sende- und Empfangsvorrichtung 12 angebracht werden.

Das Flurförderzeug 10 und die Person 20 sind in dieser Darstellung der besseren Übersichtlichkeit halber im Vergleich zu den Konturerweiterungszonen 16, 26 vergrößert dargestellt. Die Größe der Konturerweiterungszonen wird bevorzugt so gewählt, dass auch bei hohen Bewegungsgeschwindigkeiten ein rechtzeitiges Abbremsen des Flurförderzeugs 10 noch möglich ist.

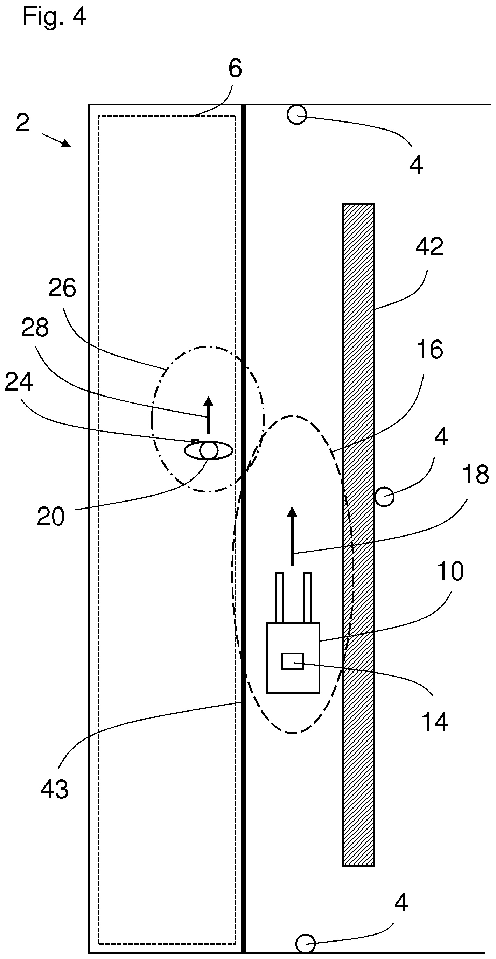

Bei einem derartigen System zur Kollisionsvermeidung oder einem derartigen Verfahren zur Kollisionsvermeidung kann es jedoch auch zum Auslösen von Schutzmaßnahmen kommen, wenn überhaupt keine Kollisionsgefahr besteht. Ein solcher Fall ist in Fig. 4 gezeigt. Dabei bewegt sich das Flurförderzeug 10 in dem Überwachungsbereich 2 nahe dem beweglichen Objekt 20, in diesem Beispiel eine Person, so dass sich die Konturerweiterungszonen 16, 26 überlappen. Da jedoch Flurförderzeug 10 und die Person 20 von einer Absperrung 43, beispielsweise einem Schutzzaun, getrennt sind, besteht keine Kollisionsgefahr. Würde trotzdem das Flurförderzeug 10 abgebremst oder sonstige Schutzmaßnahmen ergriffen werden, würde dies zu einer unnötigen Störung des Betriebs in der Warenlogistikeinrichtung und/oder einer unnötigen Belästigung der Person 20 und/oder des Fahrers des Flurförderzeugs 10 führen.

Aus diesem Grund ist der Bereich hinter der Absperrung 43, der in der Darstellung in Fig. 4 links von der Absperrung 43 liegt, als Separationszone 6 eingerichtet. Die Separationszone 6 ist in diesem Fall eine Personenschutzzone 6, in die Flurförderzeuge 10 nicht gelangen können. Solange sich die Objektposition 24 der Person 20 in der Separationszone 6 befindet, wird das Überlappen der Konturerweiterungszonen 16, 26 ignoriert und es werden keine Schutzmaßnahmen ausgelöst. Solange die Objektposition 24 bekannt ist, können derartige Separationszonen 6 auch bei anderen Arten der Ermittlung einer Kollisionsgefahr eingesetzt werden, beispielsweise einer direkten Abstandsmessung zwischen Flurförderzeug 10 und beweglichem Objekt 20.

Die Form und/oder Ausdehnung und/oder Anordnung der Separationszone 6 ist vorgebbar und umfasst einen Bereich im Überwachungsbereich 2. Ob sich das bewegliche Objekt 20 in der Separationszone 6 befindet, wird ermittelt, indem die Objektposition 24 durch Laufzeitmessung mit den Ortungsvorrichtungen 4 bestimmt wird und die Objektposition 24 anschließend mit dem für die Separationszone 6 definierten Bereich verglichen wird.

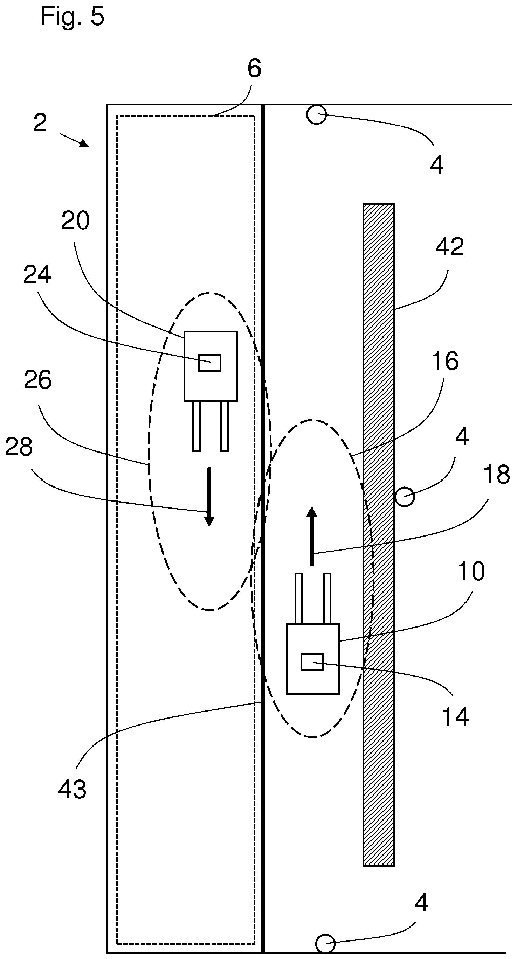

In dem in Fig. 5 gezeigten Beispiel handelt es sich bei dem beweglichen Objekt 20 nicht um eine Person, sondern um ein anderes Flurförderzeug. In diesem Fall wird durch die Absperrung 43 beispielsweise eine zweispurige Fahrbahn festgelegt. Damit sich die entgegenkommenden Flurförderzeuge 10, 20 nicht verlangsamen, ist wenigstens eine Fahrbahn oder Spur als Separationszone 6 festgelegt. Bei einer solchen Verwendung der Separationszone 6 ist es insbesondere vorteilhaft, wenn unterschieden wird, ob es sich bei dem beweglichen Objekt 20 um ein Flurförderzeug oder eine Person handelt. Weiterhin ist es vorteilhaft zu berücksichtigen, wo sich diese Person befindet. So kann in dem in Fig. 5 gezeigten Beispiel eine Person in der Separationszone 6 für die Kollisionsvermeidung zwischen Person und Flurförderzeug 10 ignoriert werden, nicht jedoch zwischen Person und Flurförderzeug 20. In diesem Fall handelt es sich bei der Separationszone 6 also um eine bedingte oder zeitlich veränderliche Separationszone.

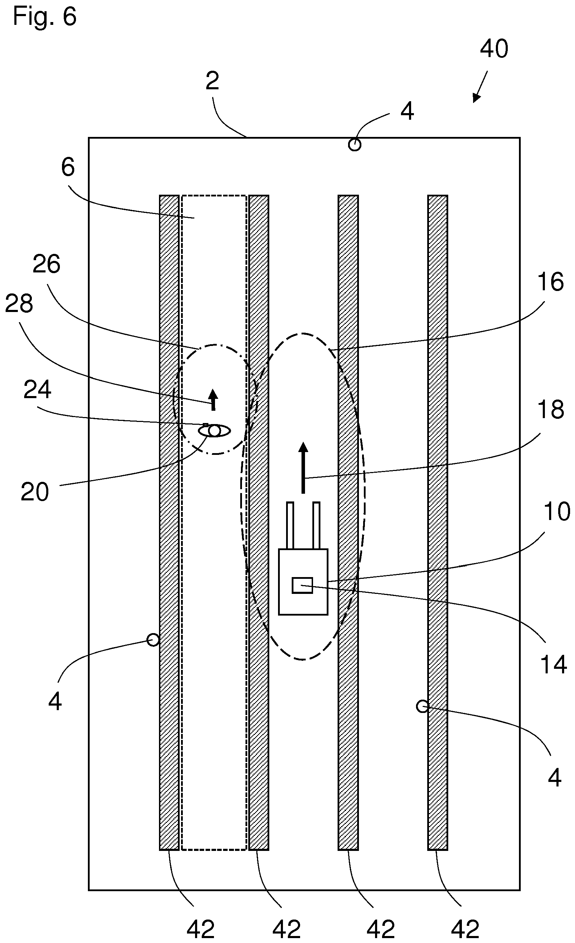

Fig. 6 zeigt ein Beispiel einer veränderlichen Separationszone 6. In der Lagerhalle 40 ist eine Reihe von unpassierbaren Hindernissen, beispielsweise Regalen 42, angeordnet, zwischen denen Korridore hindurchführen. Vorteilhafterweise sollte eine Kollisionswarnung nur ausgegeben werden, wenn sich ein Flurförderzeug 10 und ein bewegliches Objekt 20 in demselben Korridor befinden. Befinden sich Flurförderzeug 10 und bewegliches Objekt 20 jedoch in unterschiedlichen Korridoren, wie in Fig. 6 gezeigt, soll keine Kollisionsgefahr ermittelt werden.

Dazu wird der Korridor, in dem sich das bewegliche Objekt 20 befindet, als Separationszone 6 festgelegt. Zur Ermittlung der Kollisionsgefahr wird das bewegliche Objekt 20 ignoriert, wenn das Flurförderzeug 10 im benachbarten Korridor vorbeifährt. In dem Moment, wo das Flurförderzeug 10 oder ein anderes Flurförderzeug jedoch in den Korridor, in dem sich das bewegliche Objekt 20 aufhält, einfährt, wird die Separationszone 6 aufgehoben oder verkleinert. Alternativ ist auch in diesem Fall das Festlegen einer bedingten Separationszone 6 möglich, die nur für die Kollisionsvermeidung zwischen beweglichem Objekt 20 und Flurförderzeug 10, nicht jedoch für die Kollisionsvermeidung zwischen beweglichem Objekt 20 und einem sich in demselben Korridor wie das bewegliche Objekt 20 befindlichen Flurförderzeug gilt.

Personenschutzbereiche, zu denen Flurförderzeuge 10 keinen Zugang haben, werden als unveränderliche Separationszonen 6 festgelegt.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein. Im Rahmen der Erfindung sind Merkmale, die mit "insbesondere" oder "vorzugsweise" gekennzeichnet sind, als fakultative Merkmale zu verstehen.

### Bezuaszeichenliste

- 2: Überwachungsbereich
- 4: Ortungsvorrichtungen
- 5: Abstandskreis
- 6: Separationszone
- 10: Flurförderzeug
- 12: erste Sende- und Empfangsvorrichtung
- 14: Flurförderzeugposition
- 16: Fahrzeugkonturerweiterungszone
- 18: erster Bewegungsvektor
- 20: bewegliches Objekt
- 22: zweite Sende- und Empfangsvorrichtung
- 24: Objektposition
- 26: Objektkonturerweiterungszone
- 28: zweiter Bewegungsvektor
- 40: Lagerhalle
- 42: Regal
- 43: Absperrung

## Patentansprüche

1. System zur Kollisionsvermeidung in einem Überwachungsbereich (2) einer Warenlogistikeinrichtung, umfassend eine erste Sende- und Empfangsvorrichtung (12), eine zweite Sende- und Empfangsvorrichtung (22) und wenigstens zwei ortsfeste Ortungsvorrichtungen (4), wobei die Ortungsvorrichtungen (4) zum Senden und Empfangen von elektromagnetischen Signalen eingerichtet sind und die Positionen der Ortungsvorrichtungen (4) bezüglich des Überwachungsbereichs (2) vorgebbar oder bestimmbar sind, wobei die erste Sende- und Empfangsvorrichtung (12) an einem Flurförderzeug (10) und die zweite Sende- und Empfangsvorrichtung (22) an einem beweglichen Objekt (20) angeordnet sind, wobei das System dazu eingerichtet ist, eine Objektposition des beweglichen Objekts (20) in dem Überwachungsbereich (2) mittels Laufzeitmessung eines Signals zwischen der zweiten Sende- und Empfangsvorrichtung (22) und den Ortungsvorrichtungen (4) zu ermitteln, wobei das System ferner dazu eingerichtet ist zu ermitteln, ob eine Kollisionsgefahr zwischen Flurförderzeug (10) und beweglichem Objekt (20) besteht, und bei Bestehen einer Kollisionsgefahr Schutzmaßnahmen einzuleiten, wobei der Überwachungsbereich (2) wenigstens eine Separationszone (6) umfasst, und wobei das System dazu eingerichtet ist festzulegen, dass keine Kollisionsgefahr zwischen Flurförderzeug (10) und beweglichem Objekt (20) besteht, wenn sich die Objektposition (24) in der Separationszone (6) befindet, **dadurch gekennzeichnet, dass** das Bestehen und/oder die Form und/oder die Ausdehnung und/oder die Anordnung der Separationszone (6) zeitabhängig oder zeitlich veränderlich ist.

2. System nach Anspruch 1, **dadurch gekennzeichnet, dass** überprüft wird, ob sich die Objektposition (24) in der Separationszone (6) befindet, indem mittels der Ortungsvorrichtungen (4) ein festlegbarer Teil des Überwachungsbereichs (2) als Separationszone (6) definiert und die Objektposition (24) mit diesem festlegbaren Teil des Überwachungsbereichs (2) verglichen wird, wobei insbesondere die Form und/oder Ausdehnung und/oder Anordnung der Separationszone (6) vorgebbar ist.

3. System nach Anspruch 1 oder 2, **dadurch gekennzeichnet, dass** das System dazu eingerichtet ist, eine Flurförderzeugposition (14) des Flurförderzeugs (10) in dem Überwachungsbereich (2) mittels Laufzeitmessung eines Signals zwischen der ersten Sende- und Empfangsvorrichtung (12) und den Ortungsvorrichtungen (4) zu ermitteln und bei der Ermittlung der Kollisionsgefahr zwischen Flurförderzeug (10) und beweglichem Objekt (20) die Flurförderzeugposition (14) und die Objektposition (24) zu berücksichtigen.

4. System nach Anspruch 3, **dadurch gekennzeichnet, dass** eine Abhängigkeit der Separationszone (6) von der Flurförderzeugposition (14) und/oder der Objektposition (24) und/oder der Position eines ortsfesten Objekts besteht.

5. System nach Anspruch 3 oder 4, **dadurch gekennzeichnet, dass** das System dazu eingerichtet ist, für das Flurförderzeug (10) eine Fahrzeugkonturerweiterungszone (16) und das bewegliche Objekt (20) eine Objektkonturerweiterungszone (26) festzulegen, wobei die Flurförderzeugposition (14) in der Fahrzeugkonturerweiterungszone (16) und die Objektposition (24) in der Objektkonturerweiterungszone (26) liegen, wobei eine Kollisionsgefahr zwischen Flurförderzeug (10) und beweglichem Objekt (20) als bestehend ermittelt wird, wenn sich die Fahrzeugkonturerweiterungszone (16) und die Objektkonturerweiterungszone (26) überlappen und sich die Objektposition (24) außerhalb der Separationszone (6) befindet.

6. System nach Anspruch 5, **dadurch gekennzeichnet, dass** das System dazu eingerichtet ist, die Geschwindigkeit und Bewegungsrichtung des Flurförderzeugs (10) und des beweglichen Objekts (20) zu ermitteln, insbesondere mittels einem Hodometer und/oder einer inertialen Messeinheit und/oder einer Positionsbestimmung mittels Laufzeitmessung eines Signals zwischen der ersten Sende- und Empfangsvorrichtung (12) und den Ortungsvorrichtungen (4) und zwischen der zweiten Sende- und Empfangsvorrichtung (22) und den Ortungsvorrichtungen (4), wobei insbesondere die Größen der Fahrzeugkonturerweiterungszone (16) und der Objektkonturerweiterungszone (26) von der Geschwindigkeit des Flurförderzeugs (10) beziehungsweise des beweglichen Objekts (20) abhängig sind, wobei sich bei einer höheren Geschwindigkeit die Konturerweiterungszonen (16, 26) verändern, insbesondere sich vergrößern, wobei die Konturerweiterungszonen (16, 26) in Richtung der Bewegungsrichtung gegenüber anderen Richtungen weiter ausgedehnt sind.

7. System nach einem der Ansprüche 1 bis 6, **dadurch gekennzeichnet, dass** die Signalübertragung zwischen der ersten Sende- und Empfangsvorrichtung (12) und den Ortungsvorrichtungen (4) und/oder der zweiten Sende- und Empfangsvorrichtung (22) und den Ortungsvorrichtungen (4) mittels Ultra-Breitband-Technologie stattfindet.

8. System nach einem der Ansprüche 1 bis 7, **dadurch gekennzeichnet, dass** die Schutzmaßnahmen einen Eingriff in Steuerfunktionen des Flurförderzeugs (10) und/oder die Ausgabe einer Warnung umfassen.

9. Verfahren zur Kollisionsvermeidung in einem Überwachungsbereich (2) einer Warenlogistikeinrichtung, wobei wenigstens zwei Ortungsvorrichtungen (4), die zum Senden oder Empfangen von elektromagnetischen Signalen eingerichtet sind, ortsfest an vorgebbaren oder bestimmbaren Positionen angeordnet werden, wobei eine erste Sende- und Empfangsvorrichtung (12) an einem Flurförderzeug (10) und eine zweite Sende- und Empfangsvorrichtung (22) an einem beweglichen Objekt (20) fixiert wird, wobei eine Objektposition (24) des beweglichen Objekts (20) in dem Überwachungsbereich (2) mittels Laufzeitmessung eines Signals zwischen der zweiten Sende- und Empfangsvorrichtung (22) und den Ortungsvorrichtungen (4) ermittelt wird, wobei ermittelt wird, ob eine Kollisionsgefahr zwischen Flurförderzeug (10) und beweglichem Objekt (20) besteht, und bei Bestehen einer Kollisionsgefahr Schutzmaßnahmen eingeleitet werden, wobei der Überwachungsbereich (2) wenigstens eine Separationszone (6) umfasst, und wobei festgelegt wird, dass keine Kollisionsgefahr zwischen Flurförderzeug (10) und beweglichem Objekt (20) besteht, wenn sich die Objektposition (24) in der Separationszone (6) befindet, **dadurch gekennzeichnet, dass** das Bestehen und/oder die Form und/oder die Ausdehnung und/oder die Anordnung der Separationszone (6) zeitabhängig oder zeitlich veränderlich sind.

10. Verfahren nach Anspruch 9, **dadurch gekennzeichnet, dass** überprüft wird, ob sich die Objektposition (24) in der Separationszone (6) befindet, indem mittels der Ortungsvorrichtungen (4) ein festlegbarer Teil des Überwachungsbereichs (2) als Separationszone (6) definiert und die Objektposition (24) mit diesem festlegbaren Teil des Überwachungsbereichs (2) verglichen wird, wobei insbesondere die Form und/oder Ausdehnung und/oder Anordnung der Separationszone (6) vorgebbar ist.

11. Verfahren nach Anspruch 9 oder 10, **dadurch gekennzeichnet, dass** eine Flurförderzeugposition (14) des Flurförderzeugs (10) in dem Überwachungsbereich (2) mittels Laufzeitmessung eines Signals zwischen der ersten Sende- und Empfangsvorrichtung (12) und den Ortungsvorrichtungen (4) ermittelt wird und bei dem Ermitteln einer Kollisionsgefahr zwischen Flurförderzeug (10) und beweglichem Objekt (20) die Flurförderzeugposition (14) und die Objektposition (24) berücksichtigt werden, wobei insbesondere eine Abhängigkeit der Separationszone (6) von der Flurförderzeugposition (14) und/oder der Objektposition (24) und/oder der Position eines ortsfesten Objekts besteht.

12. Verfahren nach Anspruch 11, **dadurch gekennzeichnet, dass** für das Flurförderzeug (10) eine Fahrzeugkonturerweiterungszone (16) und das bewegliche Objekt (20) eine Objektkonturerweiterungszone (26) festgelegt werden, wobei die Flurförderzeugposition (14) in der Fahrzeugkonturerweiterungszone (16) und die Objektposition (24) in der Objektkonturerweiterungszone (26) liegen, wobei eine Kollisionsgefahr zwischen Flurförderzeug (10) und beweglichem Objekt (20) als bestehend ermittelt wird, wenn sich die Fahrzeugkonturerweiterungszone (16) und die Objektkonturerweiterungszone (26) überlappen und sich die Objektposition (24) außerhalb der Separationszone (6) befindet.

13. Verfahren nach Anspruch 12, **dadurch gekennzeichnet, dass** die Geschwindigkeit und Bewegungsrichtung des Flurförderzeugs (10) und des beweglichen Objekts (20) ermittelt werden, insbesondere mittels eines Hodometers und/oder einer inertialen Messeinheit und/oder einer Positionsbestimmung mittels Laufzeitmessung eines Signals zwischen der ersten Sende- und Empfangsvorrichtung (12) und den Ortungsvorrichtungen (4) und zwischen der zweiten Sende- und Empfangsvorrichtung (22) und den Ortungsvorrichtungen (4), wobei insbesondere die Größen der Fahrzeugkonturerweiterungszone (16) und der Objektkonturerweiterungszone (26) von der Geschwindigkeit des Flurförderzeugs (10) beziehungsweise des beweglichen Objekts (20) abhängig sind, wobei sich bei einer höheren Geschwindigkeit die Konturerweiterungszonen (16, 26) verändern, insbesondere sich vergrößern, wobei die Konturerweiterungszonen (16, 26) in Richtung der Bewegungsrichtung gegenüber anderen Richtungen weiter ausgedehnt sind.

14. Verfahren nach einem der Ansprüche 9 bis 13, **dadurch gekennzeichnet, dass** die Signalübertragung zwischen der ersten Sende- und Empfangsvorrichtung (12) und den Ortungsvorrichtungen (4) und/oder der zweiten Sende- und Empfangsvorrichtung (22) und den Ortungsvorrichtungen (4) mittels Ultra-Breitband-Technologie stattfindet.

15. Verfahren nach einem der Ansprüche 9 bis 14, **dadurch gekennzeichnet, dass** die Schutzmaßnahmen ein Eingreifen in Steuerfunktionen des Flurförderzeugs (10) und/oder das Ausgeben einer Warnung umfassen.

## Claims

1. A system for collision avoidance within a monitoring zone (2) of a goods logistics facility, comprising a first transmitter and receiver apparatus (12), a second transmitter and receiver apparatus (22), and at least two stationary positioning apparatuses (4), wherein the positioning apparatuses (4) are configured for transmitting and receiving electromagnetic signals, and the positions of the positioning apparatuses (4) with respect to the monitoring zone (2) can be specified or determined, wherein the first transmitter and receiver apparatus (12) being disposed on an industrial truck (10) and the second transmitter and receiver apparatus (22) being disposed on a movable object (20), wherein the system is configured for determining an object position of the movable object (20) within the monitoring zone (2) by means of travel time measurement of a signal between the second transmitter and receiver apparatus (22) and the positioning apparatuses (4), wherein the system is further configured for determining whether a risk of collision exists between the industrial truck (10) and the movable object (20) and for initiating safety measures if a collision risk does exist, wherein the monitoring zone (2) includes at least one separation zone (6), and wherein the system is configured for defining that there is no collision risk between an industrial truck (10) and a movable object (20) if the object position (24) is located within the separation zone (6), **characterized in that** the existence and/or the shape and/or the dimensions and/or the collocation of the separation zone (6) is/are time dependent or variable over time.

2. The system according to claim 1, **characterized in that** it is checked whether the object position (24) is located within the separation zone (6) by defining a specifiable part of the monitoring zone (2) as a separation zone (6) by means of the positioning apparatuses (4), and by comparing the object position (24) to such specifiable part of the monitoring zone (2), wherein in particular the shape and/or the dimensions and/or the collocation of the separation zone (6) can be specified.

3. The system according to claim 1 or 2, **characterized in that** the system is configured for determining an industrial truck position (14) of the industrial truck (10) within the monitoring zone (2) using travel time measurement of a signal between the first transmitter and receiver apparatus (12) and the positioning apparatuses (4) and for taking into account the industrial truck position (14) and the object position (24) when determining the collision risk between an industrial truck (10) and a movable object (20).

4. The system according to claim 3, **characterized in that** a dependence of the separation zone (6) exists in particular on the industrial truck position (14) and/or the object position (24) and/or the position of a stationary object.

5. The system according to claim 3 or 4, **characterized in that** the system is configured for defining a vehicle contour extension zone (16) for the industrial truck (10) and an object contour extension zone (26) for the movable object (20), wherein the industrial truck position (14) is located within the vehicle contour extension zone (16) and the object position (24) is located within the object contour extension zone (26), wherein a risk of a collision between the industrial truck (10) and the movable object (20) is determined to be present if the vehicle contour extension zone (16) and the object contour extension zone (26) overlap and if the object position (24) is located outside the separation zone (6).

6. The system according to claim 5, **characterized in that** the system is configured for determining the speed and movement direction of the industrial truck (10) and the movable object (20), in particular by means of a hodometer and/or an inertial measuring unit and/or by means of position determination using travel time measurement of a signal between the first transmitter and receiver apparatus (12) and the positioning apparatuses (4) and between the second transmitter and receiver apparatus (22) and the positioning apparatuses (4), wherein in particular the sizes of the vehicle contour extension zone (16) and the object contour extension zone (26) are dependent upon the speed of the industrial truck (10) or respectively the movable object (20), wherein the contour extension zones (16, 26) change, in particular increase in size, at a higher speed, wherein the contour extension zones (16, 26) are extended further in the direction of the movement direction in comparison to other directions.

7. The system according to one of the claims 1 to 6, **characterized in that** the signal transmission between the first transmitter and receiver apparatus (12) and the positioning apparatuses (4) and/or the second transmitter and receiver apparatus (22) and the positioning apparatuses (4) takes place by means of ultra-wideband technology.

8. The system according to one of the claims 1 to 7, **characterized in that** the safety measures include an intervention in control functions of the industrial truck (10) and/or the output of a warning.

9. A method for collision avoidance within a monitoring zone (2) of a goods logistics facility, wherein at least two positioning apparatuses (4), which are configured for transmitting or receiving electromagnetic signals, are disposed in stationary positions that can be specified or determined, wherein a first transmitter and receiver apparatus (12) is fixed to an industrial truck (10) and a second transmitter and receiver apparatus (22) is fixed to a movable object (20), wherein an object position (24) of the movable object (20) within the monitoring zone (2) is determined by means of travel time measurement of a signal between the second transmitter and receiver apparatus (22) and the positioning apparatuses (4), wherein it is determined whether a collision risk exists between an industrial truck (10) and a movable object (20) and safety measures are initiated if a collision risk exists, wherein the monitoring zone (2) includes at least one separation zone (6), and wherein it is defined that there is no collision risk between an industrial truck (10) and a movable object (20) if the object position (24) is located within the separation zone (6), **characterized in that** the existence and/or the shape and/or the dimensions and/or the collocation of the separation zone (6) is/are time dependent or variable over time.

10. The method according to claim 9, **characterized in that** it is checked whether the object position (24) is located within the separation zone (6) by defining a specifiable part of the monitoring zone (2) as a separation zone (6) by means of the positioning apparatuses (4), and by comparing the object position (24) to such specifiable part of the monitoring zone (2), wherein in particular the shape and/or the dimensions and/or the collocation of the separation zone (6) can be specified.

11. The method according to claim 9 or 10, **characterized in that** an industrial truck position (14) of the industrial truck (10) within the monitoring zone (2) is determined using travel time measurement of a signal between the first transmitter and receiver apparatus (12) and the positioning apparatuses (4) and **in that** the industrial truck position (14) and the object position (24) are taken into account when determining a collision risk between an industrial truck (10) and a movable object (20), wherein in particular a dependence of the separation zone (6) exists in particular on the industrial truck position (14) and/or the object position (24) and/or the position of a stationary object.

12. The method according to claim 11, **characterized in that** a vehicle contour extension zone (16) is defined for the industrial truck (10) and an object contour extension zone (26) is defined for the movable object (20), wherein the industrial truck position (14) is located within the vehicle contour extension zone (16) and the object position (24) is located within the object contour extension zone (26), wherein a risk of a collision between the industrial truck (10) and the movable object (20) is determined to be present if the vehicle contour extension zone (16) and the object contour extension zone (26) overlap and if the object position (24) is located outside the separation zone (6).

13. The method according to claim 12, **characterized in that** the speed and movement direction of the industrial truck (10) and the movable object (20) are determined, in particular by means of a hodometer and/or an inertial measuring unit and/or by means of position determination using travel time measurement of a signal between the first transmitter and receiver apparatus (12) and the positioning apparatuses (4) and between the second transmitter and receiver apparatus (22) and the positioning apparatuses (4), wherein in particular the contour extension zones (16, 26) change, in particular increase in size, at a higher speed, wherein the contour extension zones (16, 26) are extended further in the direction of the movement direction in comparison to other directions.

14. The method according to one of the claims 9 to 13, **characterized in that** the signal transmission between the first transmitter and receiver apparatus (12) and the positioning apparatuses (4) and/or the second transmitter and receiver apparatus (22) and the positioning apparatuses (4) takes place by means of ultra-wideband technology.

15. The method according to one of the claims 9 to 14, **characterized in that** the safety measures include an intervention in control functions of the industrial truck (10) and/or the output of a warning.

## Revendications

1. Système permettant d'éviter les collisions dans une zone surveillée (2) d'une installation de logistique de marchandises, comprenant un premier dispositif (12) d'émission et de réception, un deuxième dispositif (22) d'émission et de réception et au moins deux dispositifs de localisation (4) fixes, les dispositifs de localisation (4) étant disposés pour émettre et recevoir des signaux électromagnétiques et les positions des dispositifs de localisation (4) par rapport à la zone surveillée (2) étant prédéterminées ou déterminées, le premier dispositif (12) d'émission et de réception étant disposé sur un chariot de manutention (10) et le deuxième dispositif (22) d'émission et de réception étant disposé sur un objet mobile (20), le système étant configuré pour déterminer la position de l'objet mobile (20) dans la zone surveillée (2) au moyen de la mesure du temps de transit d'un signal entre le deuxième dispositif (22) d'émission et de réception et les dispositifs de localisation (4), le système étant en outre adapté pour déterminer s'il existe un risque de collision entre le chariot de manutention (10) et l'objet mobile (20) et pour déclencher des mesures de protection en cas de risque de collision, la zone surveillée (2) comprenant au moins une zone de séparation (6), et le système étant adapté pour déterminer qu'il n'y a pas de risque de collision entre un chariot de manutention (10) et un objet mobile (20) lorsque la position (24) de l'objet se trouve dans la zone de séparation (6), **caractérisé en ce que** l'existence et/ou la forme et/ou l'extension et/ou la disposition de la zone de séparation (6) est fonction du temps ou est variable dans le temps.

2. Système selon la revendication 1, **caractérisé en ce qu'**il est vérifié si la position (24) de l'objet est située dans la zone de séparation (6) en définissant une partie déterminable de la zone surveillée (2) comme zone de séparation (6) au moyen des dispositifs de localisation (4) et en comparant la position (24) de l'objet avec cette partie déterminable de la zone surveillée (2), la forme et/ou l'extension et/ou la disposition de la zone de séparation (6) pouvant notamment être prédéfinies.

3. Système selon la revendication 1 ou la revendication 2, **caractérisé en ce que** le système est conçu pour déterminer une position (14) de chariot de manutention du chariot de manutention (10) dans la zone surveillée (2) au moyen de la mesure du temps de transit d'un signal entre le premier dispositif (12) d'émission et de réception et les dispositifs de localisation (4) et pour prendre en compte la position (14) de chariot de manutention et la position (24) de l'objet lors de la détermination du risque de collision entre le chariot de manutention (10) et l'objet mobile (20).

4. Système selon la revendication 3, **caractérisé en ce qu'**il existe une dépendance de la zone de séparation (6) par rapport à la position (14) de chariot de manutention et/ou à la position (24) de l'objet et/ou à la position d'un objet fixe.

5. Système selon la revendication 3 ou la revendication 4, **caractérisé en ce que** le système est conçu pour définir, pour le chariot de manutention (10), une zone d'extension (16) du contour du véhicule et, pour l'objet mobile (20), une zone d'extension (26) du contour de l'objet, la position (14) de chariot de manutention se trouvant dans la zone d'extension (16) du contour du véhicule et la position (24) de l'objet se trouvant dans la zone d'extension (26) du contour de l'objet, un risque de collision entre un chariot de manutention (10) et un objet mobile (20) est déterminé comme existant si la zone d'extension (16) du contour du véhicule et la zone d'extension (26) du contour de l'objet se chevauchent et si la position (24) de l'objet est située en dehors de la zone de séparation (6).

6. Système selon la revendication 5, **caractérisé en ce que** le système est adapté pour déterminer la vitesse et la direction de déplacement du chariot de manutention (10) et de l'objet mobile (20), en particulier au moyen d'un hodomètre et/ou d'une unité de mesure inertielle et/ou d'une détermination de position au moyen de la mesure du temps de transit d'un signal entre le premier dispositif (12) d'émission et de réception et les dispositifs de localisation (4), et entre le deuxième dispositif (22) d'émission et de réception et les dispositifs de localisation (4), les dimensions de la zone d'extension (16) du contour du véhicule et de la zone d'extension (26) du contour de l'objet dépendant notamment de la vitesse du chariot de manutention (10) ou de l'objet mobile (20), les zones d'extension (16, 26) des contours se modifiant, en particulier augmentant, à une vitesse plus élevée, les zones d'extension (16, 26) des contours s'élargissant encore plus dans le sens de la direction de déplacement par rapport à d'autres directions.

7. Système selon l'une des revendications 1 à 6, **caractérisé en ce que** la transmission du signal entre le premier dispositif (12) d'émission et de réception et les dispositifs de localisation (4) et/ou le deuxième dispositif (22) d'émission et de réception et les dispositifs de localisation (4) s'effectue au moyen d'une technologie à ultra large bande.

8. Système selon l'une des revendications 1 à 7, **caractérisé en ce que** les mesures de protection comprennent une intervention dans les fonctions de commande du chariot de manutention (10) et/ou l'émission d'une alerte.

9. Procédé pour éviter les collisions dans une zone surveillée (2) d'un installation de logistique de marchandises, dans lequel au moins deux dispositifs de localisation (4), qui sont conçus pour émettre ou recevoir des signaux électromagnétiques, sont disposés dans une position fixe à des endroits pouvant être prédéterminés ou déterminés, un premier dispositif (12) d'émission et de réception étant fixé sur un chariot de manutention (10) et un deuxième dispositif (22) d'émission et de réception étant fixé sur un objet mobile (20), une position (24) d'objet de l'objet mobile (20) dans la zone surveillée (2) étant déterminée au moyen de la mesure du temps de transit d'un signal entre le deuxième dispositif (22) d'émission et de réception et les dispositifs de localisation (4) ; dans le procédé, il est déterminé s'il existe un risque de collision entre un chariot de manutention (10) et un objet mobile (20) et, en cas de risque de collision, des mesures de protection sont prises, la zone surveillée (2) comprenant au moins une zone de séparation (6), et il est déterminé qu'il n'y a pas de risque de collision entre le chariot de manutention (10) et l'objet mobile (20) lorsque la position (24) d'objet est située dans la zone de séparation (6), **caractérisé en ce que** l'existence et/ou la forme et/ou l'étendue et/ou la disposition de la zone de séparation (6) est fonction du temps ou est variable dans le temps..

10. Procédé selon la revendication 9, **caractérisé en ce que** l'on vérifie si la position (24) d'objet est située dans la zone de séparation (6) en définissant une partie déterminable de la zone surveillée (2) comme zone de séparation (6) au moyen des dispositifs de localisation (4) et en comparant la position (24) de l'objet avec cette partie déterminable de la zone surveillée (2), la forme et/ou l'extension et/ou la disposition de la zone de séparation (6) pouvant notamment être prédéfinies.

11. Procédé selon la revendication 9 ou la revendication 10, **caractérisé en ce qu'**une position (14) de chariot de manutention du chariot de manutention (10) dans la zone surveillée (2) est déterminée au moyen de la mesure du temps de transit d'un signal entre le premier dispositif (12) d'émission et de réception et les dispositifs de localisation (4), et la position (14) de chariot de manutention et la position (24) d'objet sont prises en compte lors de la détermination d'un risque de collision entre le chariot de manutention (10) et l'objet mobile (20), une dépendance de la zone de séparation (6) existant notamment par rapport à la position (14) du chariot de manutention et/ou à la position (24) de l'objet et/ou à la position d'un objet fixe.

12. Procédé selon la revendication 11, **caractérisé en ce que**, pour le chariot de manutention (10), il est défini une zone d'extension (16) du contour du véhicule, et, pour l'objet mobile (20), il est défini une zone d'extension (26) du contour de l'objet, la position (14) de chariot de manutention se trouvant dans la zone d'extension (16) du contour du véhicule et la position (24) de l'objet se trouvant dans la zone d'extension (26) du contour de l'objet, un risque de collision entre un chariot de manutention (10) et un objet mobile (20) étant déterminé comme existant si la zone d'extension (16) du contour du véhicule et la zone d'extension (26) du contour de l'objet se chevauchent et si la position (24) de l'objet est située en dehors de la zone de séparation (6).

13. Procédé selon la revendication 12, **caractérisé en ce que** la vitesse et la direction de déplacement du chariot de manutention (10) et de l'objet mobile (20) sont déterminées, en particulier au moyen d'un hodomètre et/ou d'une unité de mesure inertielle et/ou d'une détermination de position par mesure du temps de transit d'un signal entre le premier dispositif (12) d'émission et de réception et les dispositifs de localisation (4) et entre le deuxième dispositif (22) d'émission et de réception et les dispositifs de localisation (4), les dimensions de la zone d'extension (16) du contour du véhicule et de la zone d'extension (26) du contour de l'objet étant notamment dépendantes de la vitesse du chariot de manutention (10) ou de l'objet mobile (20), les zones d'extension (16, 26) des contours se modifiant, en particulier augmentant, à une vitesse plus élevée, les zones d'extension (16, 26) des contours s'élargissant encore plus dans le sens de la direction de déplacement par rapport à d'autres directions.

14. Procédé selon l'une des revendications 9 à 13, **caractérisé en ce que** la transmission du signal entre le premier dispositif (12) d'émission et de réception et les dispositifs de localisation (4) et/ou le deuxième dispositif (22) d'émission et de réception et les dispositifs de localisation (4) s'effectue au moyen d'une technologie à très large bande.

15. Procédé selon l'une des revendications 9 à 14, **caractérisé en ce que** les mesures de protection comprennent une intervention dans les fonctions de commande du chariot de manutention (10) et/ou l'émission d'une alerte.
